# EUROPÄISCHE PATENTSCHRIFT

(11) **EP 2 283 098 B1**
(45) Veröffentlichungstag und Bekanntmachung des Hinweises auf die Patenterteilung: **28.09.2016**
(21) Anmeldenummer: 09781472.7
(22) Anmeldetag: 04.08.2009
(51) Int. Cl.: C09J 7/02, B32B 37/02

(54) **VERFAHREN ZUR HERSTELLUNG VON BANDFÖRMIGEN LAMINATEN**
METHOD FOR PRODUCING STRIP LAMINATES
PROCÉDÉ DE FABRICATION DE STRATIFIÉS EN FORME DE BANDES

(30) Priorität: 21.08.2008 DE 102008038595
(43) Veröffentlichungstag der Anmeldung: 16.02.2011
(73) Patentinhaber: tesa SE, 22848 Norderstedt (DE)
(72) Erfinder: SCHULZE, Rainer, 22089 Hamburg (DE); EVERS, Michael, 22397 Hamburg (DE); CZERWONATIS, Nils, 22393 Hamburg (DE)
(86) Internationale Anmeldenummer: PCT/EP2009/060095
(87) Internationale Veröffentlichungsnummer: WO 2010/020537

(56) Entgegenhaltungen:
- EP-A1- 1 053 793
- DE-A1- 10 147 036
- JP-A- 5 043 850
- JP-A- 7 011 208
- JP-A- 7 324 182
- US-A- 5 503 705

## Beschreibung

Die Erfindung betrifft ein Verfahren zur Herstellung von bandförmigen Laminaten. Bandförmige Laminate, insbesondere ein- oder beidseitig klebende Klebebänder, werden nach dem Stand der Technik mittels eines Verfahrens hergestellt, das in der Regel drei Teilschritte umfasst. Im ersten Teilschritt wird eine Haftklebemasse kontinuierlich auf ein sich in seiner Längsrichtung bewegendes bandförmiges Eindeckmaterial aufgebracht. Anschließend durchläuft das mit der Haftklebemasse beschichtete Eindeckmaterial im zweiten Teilschritt einen Trocknungsapparat, in dem die Haftklebemasse auf dem Eindeckmaterial getrocknet wird. Im dritten Teilschritt wird die dem Eindeckmaterial abgewandte Oberseite der Haftklebemasse mit einem bandförmigen Trägermaterial kaschiert, wobei das Trägermaterial unmittelbar vor dem Kaschieren einer Corona-Behandlung unterzogen wird. Das so erhaltene dreischichtige Laminat, das das bandförmige Trägermaterial, auf diesem die Haftklebemasse und auf dieser wiederum das Eindeckmaterial umfasst, wird anschließend auf eine Rolle aufgerollt. Mittels dieses Verfahrens können ebenso doppelseitige Klebebänder hergestellt werden.

Dieses bekannte Verfahren hat mehrere Nachteile. Zum einen ist die Produktivität derartiger Anlagen vergleichsweise gering, da das Kaschieren im dritten Teilschritt eine geringere Bahngeschwindigkeit erfordert, als für die Beschichtung im ersten Teilschritt und die Trocknung im zweiten Teilschritt erforderlich sind. Das Kaschieren ist somit der geschwindigkeitsbestimmende Schritt und begrenzt damit die Produktivität der Anlage zur Herstellung des Klebebandes.

Andererseits ist es in bestimmten Fällen nachteilig, wenn das Eindeckmaterial den Trocknungsapparat durchläuft. Die in der Trocknungsanlage herrschende Temperatur kann zu einer unerwünschten Veränderung oder Zerstörung des Eindeckmaterials führen. Beispielweise kann die Trocknung zu einer Austrocknung des Eindeckmaterials führen. Daher können in dem beschriebenen Verfahren nur bestimmte Eindeckmaterialien verwendet werden, während andere Eindeckmaterialien, die aufgrund ihrer Eigenschaften beispielsweise bei Klebebändern erwünscht sind, nicht eingesetzt werden können. Das vorbekannte Verfahren begrenzt somit die Anzahl möglicher Eindeckmaterialen auf solche, die durch den Beschichtungs- und Trocknungsschritt nicht nachteilig verändert werden.

Aus DE 101 47 036 A1 ist ein Verfahren zum Delaminieren und Laminieren von Bahnen bekannt. Dieses Verfahren verwendet dehäsiv ausgestattete Trägermaterialien, die kaschiert und dekaschiert werden, wobei die Laminierung der Kleberschicht auf das dehäsiv ausgestattete Trägermaterial und die Delaminierung des Trägermaterials ohne eine Verfahrensunterbrechung vorgenommen werden.

Die JP 07 324 182 A offenbart eine Vorrichtung und Verfahren, um ein doppelseitiges Klebeband herzustellen. Mit diesem Verfahren ist aber nicht möglich, ein unbeschichtetes Trägermaterial in einem einzigen geschlossenen Verfahrensablauf ober- und unterseitig mit jeweils einer Klebemasse auszurüsten.

Aufgabe der Erfindung ist es, die Nachteile nach dem Stand der Technik zu beseitigen. Es soll insbesondere ein Verfahren zur Herstellung eines bandförmigen Laminats angegeben werden, bei dem die Geschwindigkeit der Laminierung nicht die Geschwindigkeit der Beschichtung einer Klebemasse auf ein bandförmiges Trägermaterial und die Trocknung der laminierten Kleberschicht bestimmt. Ferner sollen eine Vorrichtung zur Durchführung des Verfahrens und Verwendungen der Vorrichtung angegeben werden.

Diese Aufgabe wird durch die Merkmale der Ansprüche 1, 16 und 23 gelöst. Zweckmäßige Ausgestaltungen der Erfindungen ergeben sich aus den Merkmalen der Ansprüche 2 bis 15, 17 bis 22 und 24.

Nach Maßgabe der Erfindung ist ein Verfahren zur Herstellung eines bandförmigen Laminats vorgesehen, das ein bandförmiges Trägermaterial und auf zumindest einer der Oberflächen des bandförmigen Trägermaterials eine erste Kleberschicht umfasst. Das Verfahren umfasst folgende Schritte:
(a) Beschichten eines ersten bandförmigen Hilfsträgermaterials mit zumindest einer ersten Kleberschicht und Aufwickeln des beschichteten ersten Hilfsträgermaterials auf eine erste Rolle;
(b) Abwickeln des beschichteten ersten bandförmigen Hilfsträgermaterials von der ersten Rolle und Führen des beschichteten ersten bandförmigen Hilfsträgermaterials zu einer ersten Kaschierwalze;
(c) Laminieren des beschichteten ersten bandförmigen Hilfsträgermaterials auf das bandförmige Trägermaterial, so dass die erste Kleberschicht dem bandförmigen Träger zugewandt ist; und
(d) Delaminieren des ersten Hilfsträgermaterials von der ersten Kleberschicht.

Das erfindungsgemäße Verfahren trennt die Beschichtung des Trägermaterials mit der Kleberschicht und deren Trocknung auf der Trägerschicht von der Kaschierung. Demnach werden Schritt (a), d.h. der Beschichtungs- und Trocknungsprozess einerseits und die Schritte (b) bis (d), d.h. der Kaschierungsprozess andererseits getrennt voneinander ausgeführt. Mit einer ersten Anlage kann somit die erste Kleberschicht auf ein Hilfsträgermaterial laminiert und dann getrocknet werden. Das so beschichtete Hilfsträgermaterial wird dann auf eine Rolle aufgewickelt. Die Herstellung des beschichteten Hilfsträgermaterials kann somit völlig unabhängig davon geschehen, wie schnell die Kaschierung in den Schritten (b) bis (d) erfolgt. Durch die Trennung dieser beiden Prozesse wird ein erheblicher Geschwindigkeitsgewinn bei der Herstellung von bandförmigen Laminaten erzielt. Dies ist darauf zurückzuführen, dass weniger Haltestellen, die beispielsweise auf die Lauflängen der einzelnen Materialien oder häufige Ballenwechsel zurückzuführen sind, entfallen. Ferner kann jeder Prozess unabhängig von dem anderen beliebig gestoppt und wieder angefahren werden. Auch können die beiden Prozesse örtlich und zeitlich voneinander getrennt werden.

Ferner werden durch das erfindungsgemäße Verfahren mögliche Fehlstellen im Trägermaterial vermieden und dadurch Kosten gespart. Tritt ein Fehler bei der Laminatherstellung im Beschichtungs- und Trocknungsprozess auf und müssen entsprechend die Herstellungsvorrichtungen angehalten werden, entstehen Fehlstellen im bandförmigen, noch nicht fertiggestellten Laminat, die herausgeschnitten werden müssen. Somit müssen bei herkömmlichen Verfahren z. T. große Abschnitte mit Trägermaterial herausgeschnitten und entsorgt werden, da dieses bereits im Beschichtungs- und Trocknungsprozess eingesetzt wird. Beim erfindungsgemäßen Verfahren muss dagegen nur das wesentlich kostengünstigere Hilfsträgermaterial weggeschnitten werden.

Weiterhin hat das Hilfsträgermaterial im Allgemeinen wesentlich längere Lauflängen als das Trägermaterial, so dass beim erfindungsgemäßen Verfahren im Vergleich zum Stand der Technik beim Beschichtungs- und Trocknungsprozess die einzelnen Bandabschnitte wesentlich länger sind und somit die Herstellungsvorrichtungen zur Erneuerung des Bandmaterials seltener angehalten werden müssen. Somit wird die Effizienz des Verfahrens erhöht.

Das Hilfsträgermaterial, das auch als Prozessliner bezeichnet wird, kann wieder verwendet werden. Hierdurch können erhebliche Kosten eingespart werden. Da das Hilfsträgermaterial kein Bestandteil des Endproduktes wird, kann das Trägermaterial, das im Endprodukt verwendet wird, unabhängig davon gewählt werden, ob es durch die Beschichtung und anschließende Trocknung im Beschichtungs- und Trocknungsprozess nachteilig verändert wird. Insbesondere werden eine Austrocknung des Trägermaterials und dessen möglicherweise erforderliche Rückbefeuchtung vermieden. Beispielsweise herrschen beim Beschichtungs- und Trocknungsprozess Temperaturen von 40° bis 180° C vor, während der Kaschierungsprozess beispielsweise bei Raumtemperatur vorgenommen werden kann. Bei den aus dem Stand der Technik bekannten Verfahren ist das Trägermaterial, im Gegensatz zur vorliegenden Erfindung, den höheren Temperaturen aus dem Beschichtungs- und Trocknungsprozess ausgesetzt, so dass an die Temperaturbeständigkeit des Trägermaterials viel höhere Anforderungen gestellt werden. Darüber hinaus ist das Material im Beschichtungs- und Trocknungsprozess Bestrahlung (z. B. ESH-Bestrahlung) und höheren mechanischen Belastungen als im Kaschierungsprozess ausgesetzt. Insofern kann gemäß der vorliegenden Erfindung als Trägermaterial ein Material verwendet werden, dass weniger strahlungs- und druckresistent ist, als das Hilfsträgermaterial. Im Gegensatz zum Beschichtungs- und Trocknungsprozess wird das Material im Kaschierprozess keinen chemischen Veränderungen ausgesetzt. Insgesamt kann da-her das Trägermaterial weniger robust sein, als dies bei dem Verfahren nach dem Stand der Technik der Fall sein muss.

Das mit der Klebemasse beschichtete Hilfsträgermaterial wird hier als das beschichtete Hilfsträgermaterial bezeichnet. Das Hilfsträgermaterial ist vorzugsweise beidseitig anti haftbeschichtet, was den Übertrag der Kleberschicht auf das bandförmige Trägermaterial erleichtert.

Unter dem Begriff "Auflegen" wird Auflegen eines Materials auf eine Walze verstanden. Befindet sich auf der Walze bereits ein erstes Material, so wie bei Auflegen eines zweiten Materials das zweite Material auf das erste Material laminiert. Die Begriffe "Laminieren" und "Kaschieren" werden synonym verwendet, sofern nicht anderes angegeben. Die Begriffe "Delaminieren" und "Dekaschieren" werden synonym verwendet, sofern nicht anderes angegeben ist.

Das Verfahren umfasst ferner die Schritte
(e) Beschichten eines zweiten bandförmigen Hilfsträgermaterials mit zumindest einer zweiten Kleberschicht und das Aufwickeln des beschichteten zweiten Hilfsträger-materials auf eine zweite Rolle;
(f) Abwickeln des beschichteten zweiten bandförmigen Hilfsträgermaterials von der zweiten Rolle und Führen des beschichteten zweiten bandförmigen Hilfsträgerma-terials zu der ersten Kaschierwalze oder zu einer zweiten Kaschierwalze;
(g) Laminieren des beschichteten zweiten bandförmigen Hilfsträgermaterials auf das bandförmige Trägermaterial, so dass die zweite Kleberschicht dem bandförmigen Trägermaterial zugewandt ist; und
(h) Delaminieren des zweiten Hilfsträgermaterials von der zweiten Kleberschicht.

Mittels dieser Ausführungsform der Erfindung kann ein doppelseitiges Klebeband hergestellt werden.

Die Schritte (a) und (e), die beide zum Beschichtungs- und Trocknungsprozess gehören, können unabhängig voneinander vor den Schritten (b) bis (f) ausgeführt werden. Die Schritte (c), (d), (g) und (f) können auf einer Kaschierwalze oder zwei Kaschierwalzen ausgeführt werden.

Zweckmäßigerweise wird auf die erste Kleberschicht im Anschluss an Schritt (d) ein bandförmiges Eindeckmaterial laminiert. Dies kann beispielsweise auf der ersten Kaschierwalze geschehen.

In einer ebenso bevorzugten Ausführungsform der Erfindung ist vorgesehen, dass insbesondere zur Herstellung eines doppelseitigen Klebebandes
- mittels einer ersten Auflegewalze das bandförmige Trägermaterial auf die erste Kaschierwalze aufgelegt wird und auf das bandförmige Trägermaterial das beschichtete erste Hilfsträgermaterial aufgelegt wird, wobei die erste Kleberschicht dem Trägermaterial zugewandt ist;
- mittels einer in Bahnrichtung folgenden ersten Dekaschierungseinrichtung das erste Hilfsträgermaterial von der ersten Kleberschicht delaminiert wird;
- mittels einer in Bahnrichtung folgenden zweiten Auflegewalze das Eindeckmaterial auf die erste Kleberschicht laminiert wird;
- das bandförmige Trägermaterial, das auf einer Seite mit der Kleberschicht und darauf mit dem Eindeckmaterial laminiert ist, von der ersten Kaschierwalze abgenommen und auf eine zweite Kaschierwalze aufgelegt wird, wobei das Eindeckmaterial der zweiten Kaschierwalze zugewandt ist; und
- mittels einer in Bahnrichtung folgenden dritten Auflegewalze auf das bandförmige Trägermaterial das beschichtete zweite Hilfsträgermaterial aufgelegt wird, wobei die zweite Kleberschicht dem Trägermaterial zugewandt ist; und
- mittels einer in Bahnrichtung folgenden zweiten Dekaschierungseinrichtung das zweite Hilfsträgermaterial von der zweiten Kleberschicht delaminiert wird.

Alternativ kann in einer weiteren bevorzugten Ausführungsform ein doppelseitiges Klebeband hergestellt werden, indem
- mittels einer ersten Auflegewalze das beschichtete erste Hilfsträgermaterial auf die erste Kaschierwalze aufgelegt wird, so dass die Kleberschicht der Kaschierwalze abgewandt ist, und das bandförmige Trägermaterial auf die erste Kleberschicht aufgelegt wird;
- mittels einer in Bahnrichtung folgenden zweiten Auflegewalze auf das bandförmige Trägermaterial das beschichtete zweite Hilfsträgermaterial aufgelegt wird, wobei die zweite Kleberschicht dem Trägermaterial zugewandt ist;
- mittels einer in Bahnrichtung folgenden ersten Dekaschierungseinrichtung das zweite Hilfsträgermaterial von der zweiten Kleberschicht delaminiert wird;
- mittels einer in Bahnrichtung folgenden dritten Auflegewalze das Eindeckmaterial auf die zweite Kleberschicht laminiert wird;
- mittels einer in Bahnrichtung folgenden zweiten Dekaschierungseinrichtung das erste Hilfsträgermaterial von der ersten Kleberschicht delaminiert wird.

In einer weiteren bevorzugten Ausführungsform der Erfindung zur Herstellung eines doppelseitigen Klebebandes ist vorgesehen, dass
- das beschichtete erste Hilfsträgermaterial und das bandförmige Trägermaterial zwischen einem ersten Walzenpaar laminiert werden, so dass die erste Kleberschicht zwischen dem ersten Hilfsträgermaterial und dem bandförmigen Trägermaterial angeordnet ist;
- auf die unbeschichtete Seite des bandförmigen Trägermaterials mittels eines in Bahnrichtung folgenden zweiten Walzenpaares das beschichtete zweite Hilfsträgermaterial laminiert wird, wobei die zweite Kleberschicht zwischen dem zweiten Hilfsträgermaterial und dem bandförmigen Trägermaterial angeordnet ist;
- eines der beiden Hilfsträgermaterialien mittels einer in Bahnrichtung folgenden ersten Dekaschierungseinrichtung delaminiert wird;
- das Eindeckmaterial mittels eines in Bahnrichtung folgenden dritten Walzenpaares auf die freiliegende erste oder zweite Kleberschicht laminiert wird; und
- das verbliebene Hilfsträgermaterial mittels einer in Bahnrichtung folgenden zwei-ten Dekaschierungseinrichtung delaminiert wird.

Ferner ist es möglich, den Kaschierungsprozess in zwei Verfahrensabschnitte zu gliedern, um die Verfahrensbedingungen zu vereinfachen. Dabei kann
- in einem ersten Verfahrensabschnitt ein Laminat-Vorprodukt mit der Schichtfolge erstes Hilfsträgermaterial/erste Kleberschicht/bandförmiges Trägermaterial/zweite Kleberschicht hergestellt und das Laminat-Vorprodukt auf eine Walze aufgewikkelt werden; und
- in einem zweiten Verfahrensschritt das Laminat-Vorprodukt von der Walze abgewickelt und auf die zweite Kleberschicht das Eindeckmaterial unter Erhalt des Laminat-Endproduktes laminiert werden.

Alternativ kann
- in einem ersten Verfahrensabschnitt ein Laminat-Vorprodukt mit der Schichtfolge bandförmiges Trägermaterial/zweite Kleberschicht/Eindeckmaterial hergestellt und das Laminat-Vorprodukt auf eine Walze aufgewickelt werden; und
- in einem zweiten Verfahrensschritt das Laminat-Vorprodukt von der Walze abgewickelt und auf die unbeschichtete Oberfläche des bandförmigen Trägermaterials das beschichtete erste Hilfsträgermaterial laminiert werden und das erste Hilfsträgermaterial in einer in Bahnrichtung folgenden Dekaschierungseinrichtung unter Erhalt des Laminat-Endproduktes delaminiert werden.

Vorzugsweise wird das bandförmige Trägermaterial vor dessen Laminierung einer Corona-Behandlung unterzogen. Die erste Kleberschicht und die zweite Kleberschicht können gleich oder unterschiedlich sein. Ebenso könnend das erste Hilfsträgermaterial und das zweite Hilfsträgermaterial gleich oder unterschiedlich sein.

Das erfindungsgemäße Verfahren kann mit einer Vorrichtung zur Herstellung eines bandförmigen Laminats durchgeführt werden. Die Vorrichtung umfasst eine Aufnahmeeinrichtung für die erste Rolle, von der das beschichtete erste Hilfsträgermaterial abgewickelt wird; eine Kaschierwalze; eine Auflegewalze zum Auflegen des bandförmigen Trägermaterials und des beschichteten ersten Hilfsträgermaterials auf die Kaschierwalze; und eine erste Dekaschierungseinrichtung zum Delaminieren des ersten Hilfsträgermaterials von der ersten Kleberschicht.

Soll ein doppelseitiges Klebeband hergestellt werden, umfasst die Vorrichtung zweckmäßigerweise ferner eine Aufnahmeeinrichtung für die zweite Rolle, von der das beschichtete zweite Hilfsträgermaterial abgewickelt wird; eine Auflegewalze zum Auflegen des beschichteten zweiten Hilfsträgermaterials und eine zweite Dekaschierungseinrichtung zum Delaminieren des zweiten Hilfsträgermaterials von der zweiten Kleberschicht.

Es sollte eine Auflegewalze zum Auflegen des Eindeckmaterials vorgesehen sein.

Die Delaminierungseinrichtungen können eine Walze, insbesondere mit Radien im Bereich von 5 mm bis 100 mm und besonders bevorzugt im Bereich von 10 mm bis 50 mm, oder ein abgerundeter Keil, insbesondere mit Abrundungsradien von 1 mm bis zu einem Radius gleich der Walze und besonders bevorzugt mit Radien von 5 mm bis 30 mm, sein.

Die Auflegewalzen stehen in Kontakt mit der Kaschierwalze, und zwar derart, dass die Achsen der Walzen parallel angeordnet sind, wobei die Anordnung der Auflegewalzen durch die Anordnung der anderen, in Kontakt mit der Kaschierwalze stehenden Walzen begrenzt wird. Die Spalteinstellung zwischen einer Auflegewalze und der Kaschierwalze sollte variabel einstellbar sein, und die Laminierung kann mit Liniendrücken von 0 N/mm bis 50 N/mm, besonders bevorzugt mit Liniendrücken von 2 N/mm bis 10 N/mm erfolgen.

Walzenpaare, die erfindungsgemäß vorgesehen sind, bestehen aus zwei, sich gegenüberstehenden Walzen, wobei die Spalteinstellung variabel einstellbar sein sollte und die Laminierung mit Liniendrücken von 0 bis 50 N/mm, besonders bevorzugt mit Liniendrükken von 2 bis 10 N/mm erfolgen kann.

Alle Walzen sind vorzugsweise mit Öl, Wasser, Dampf, elektrisch oder anderen Temperiermedien in einem bevorzugten Bereich von -40 °C bis 200 °C kühl- oder beheizbar, des weiteren sind die Walzenoberflächen aus Stahl, Edelstahl, verchromtem Stahl, dehäsiv ausgestattetem Stahl oder Edelstahl oder aus elastischem oder elastisch dehäsiv ausgestattetem Material mit einer Shore-Härte (A) von 20 bis 100, insbesondere mit einer Shore-Härte (A) von 60 bis 80. Der elastische Walzenbezug kann bevorzugt aus EPDM, VITON, Silikongummi oder dehäsiv ausgestattetem EPDM, VITON oder Silikongummi bestehen.

Als bandförmiges Trägermaterial können beispielweise Vliese, Papiere, orientierte PP-, HDPE-, LDPE-, PVC- und PET-Folien sowie Schäume (z. B. PE-Schäume oder PVA-Schäume) und Gewebe verwendet werden, wobei diese Aufzählung nicht abschließend ist. Bevorzugt ist das Trägermaterial reiss- und dehnsensibel ausgebildet.

Als Hilfsträgermaterial werden vorzugsweise einseitig oder beidseitig antihaftbeschichtete Trägermaterialien wie beispielsweise Papier, insbesondere beschichtetes Papier, wie PE-Papier, orientierte PP-, HDPE-, LDPE-, PVC-, MOPP-, BOPP-, PEN-, PMP-, PA- und PET-Folien eingesetzt. Besonders bevorzugt sind silikonbeschichtete Trägermaterialien sowie Trägermaterialien die silikonfreie Trennschichten wie zum Beispiel Paraffin, Teflon oder Wachse aufweisen. Auch sind Verbundmaterialien, wie beispielsweise PET/Aluminium-Folie, verwendbar. Vorteilhafterweise ist das Hilfsträgermaterial nassfest ausgebildet.

Bestehen das bandförmige Trägermaterial, das erste Hilfsträgermaterial und/oder das zweite Hilfsträgermaterial aus Papier, so hat das Papier vorzugsweise ein Flächengewicht von 40 g/m² bis 200 g/m².

Bestehen das erste Hilfsträgermaterial und/oder das zweite Hilfsträgermaterial aus orientiertem Polypropylen (PP), so hat dieses vorzugsweise eine Dicke von 40 bis 200 µm, besonders bevorzugt 75 bis 125 µm. Bestehen die Hilfsträgermaterialien aus Polyesterträgerbahnen (PET), so haben diese bevorzugt eine Dicke von 20 bis 200 µm, besonders bevorzugt 40 bis 80 µm. Das Trägermaterial kann dagegen bevorzugterweise dünner ausgebildet sein, beispielsweise mit einer Dicke von 5 bis 50 µm, insbesondere 6 bis 15 µm. Dies wird dadurch ermöglicht, dass das Trägermaterial keinen chemischen Veränderungen und geringeren mechanischen Belastungen als das Hilfsträgermaterial ausgesetzt ist.

Bevorzugt werden beidseitig und einseitig silikonbeschichtete Hilfsträgermaterialien mit Trennkräften, gemessen nach BDF Prüfmethode JOPMH003, Testband tesa 7475, zwisehen 1 bis 60 cN/cm, Testband tesa 7476, zwischen 3 bis 100 cN/cm, besonders bevorzugt mit Trennkräften kleiner 20 cN/cm, Testband tesa 7475, und kleiner 30 cN/cm, Testband tesa 7476, verwendet.

Als Eindeckmaterial kann beispielsweise silikonisiertes Papier, Folie, z. B. MOPP-, PET- oder PE-Folie, oder beschichtetes Papier verwendet werden.

Als Klebemasse zur Herstellung der Kleberschicht können sowohl Klebemassen auf Basis von lösemittelhaltigen Naturkautschuk- und Acrylatklebemassen als auch lösungsmittelfreie Klebemassen verwendet werden. Ein Beispiel für lösungsmittelhaltige Klebemassen sind Klebemassen auf Basis von Styrol-Isopren-Styrol-Blockcopolymeren.

Die Auftragsmenge der Klebemasse auf das Trägermaterial beträgt bevorzugt 15 bis 150 g/m². In einer weiteren bevorzugten Ausführung wird der Schichtauftrag von 20 bis 90 g/m² eingestellt.

Der Beschichtungs- und Trocknungsprozess kann nach bekannten Verfahren erfolgen. Eine Übersicht über übliche Herstellungsverfahren findet sich beispielsweise in "Coating Equipment", Donatas Satas in Handbook of Pressure Sensitive Adhesive Technology, second edition, edited by Donatas Satas, Van Nostrand Reinhold New York pp. 767-808. Die bekannten Verfahren zum Trocknen und Schneiden der Klebebänder sind ebenfalls im Handbook of Pressure Sensitive Adhesive Technology, Seite 809-874 zu finden.

Als Klebemasse ist eine solche auf Acrylathotmelt-Basis geeignet, die einen K-Wert von mindestens 20 aufweist, insbesondere größer 30 (gemessen jeweils in 1 gew.-%iger Lösung in Toluol, 25 °C), erhältlich durch Aufkonzentrieren einer Lösung einer solchen Masse zu einem als Hotmelt verarbeitbaren System. Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

In der Klebemasse auf Acrylathotmelt-Basis können Benzoinderivate einpolymerisiert sein, beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt. Der Restlösungsmittel-Gehalt sollte unter 1 Gew.-% betragen.

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymere (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol-(SIS) und Styrol-Butadien-Styrol(SBS)-Typen.

Als klebrig machende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäss einzustellen. Auf die Darstellung des Wissensstandes im "Handbook of Pressure Sensitive Adhesive Technology" von Donatas Satas (von Nostrand, 1989) sei ausdrücklich hingewiesen.

Die Erfindung wird nachstehend anhand von Ausführungsformen unter Bezugnahme auf die Zeichnungen näher erläutert. Dabei zeigen
- Fig. 1: eine schematische Darstellung des Beschichtungs- und Trocknungsprozesses;
- Fig. 2: eine schematische Darstellung einer ersten Ausführungsform des erfindungsgemäßen Kaschierprozesses unter Verwendung von zwei Kaschierwalzen;
- Fig. 3: eine schematische Darstellung einer zweiten Ausführungsform des erfindungsgemäßen Kaschierprozesses unter Verwendung einer Kaschierwalze;
- Fig. 4: eine schematische Darstellung einer dritten Ausführungsform des erfindungsgemäßen Kaschierprozesses unter Verwendung von Walzenpaaren;
- Fig. 5: eine schematische Darstellung eines ersten Verfahrensabschnitts einer vierten Ausführungsform des erfindungsgemäßen Kaschierprozesses;
- Fig. 6: eine schematische Darstellung des zweiten Verfahrensabschnitts der in Fig. 5 gezeigten vierten Ausführungsform des erfindungsgemäßen Kaschierprozesses;
- Fig. 7: eine schematische Darstellung eines ersten Verfahrensabschnitts einer fünften Ausführungsform des erfindungsgemäßen Kaschierprozesses;
- Fig. 8: eine schematische Darstellung des zweiten Verfahrensabschnitts der in Fig. 7 gezeigten fünften Ausführungsform des erfindungsgemäßen Kaschierprozesses;
- Fig. 9: eine schematische Darstellung eines ersten Verfahrensabschnitts einer sechsten Ausführungsform des erfindungsgemäßen Kaschierprozesses;
- Fig. 10: eine schematische Darstellung des zweiten Verfahrensabschnitts der in Fig. 9 gezeigten sechsten Ausführungsform des erfindungsgemäßen Kaschierprozesses; und
- Fig. 11: eine schematische Darstellung einer siebten Ausführungsform des erfindungsgemäßen Kaschierprozesses.

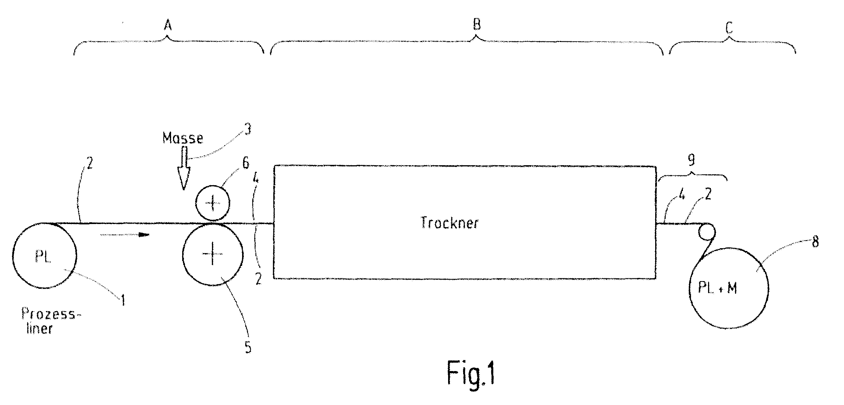

In Fig. 1 ist ein Beschichtungs- und Trocknungsprozess, der den Schritten (a) und/oder (e) des erfindungsgemäßen Verfahrens entspricht, gezeigt. In Abschnitt A wird das erste Hilfsträgermaterial 2 von einer Vorratsrolle 1 abgewickelt. Auf das erste Hilfsträgermaterial 2 wird anschließend eine Klebemasse 3 aufgebracht, die mittels eines Walzenpaares 5, 6 als eine Kleberschicht 4 auf das erste Hilfsträgermaterial 2 laminiert wird, wodurch das beschichtete erste Hilfsträgermaterial 9 erhalten wird. In Abschnitt B wird das beschichtete Hilfsträgermaterial durch einen Trockner 7 geführt und schließlich in Abschnitt C auf eine Vorratsrolle 8 für das beschichtete erste Hilfsträgermaterial 9 aufgewickelt.

Prinzipiell gleicht sich die Herstellung des beschichteten ersten Hilfsträgermaterials 9 und des beschichteten zweiten Hilfsträgermaterials 10, wobei die eingesetzten Materialien wie das Material des Hilfsträgermaterials und das Material der Kleberschicht sowie die Verfahrensbedingungen variieren können.

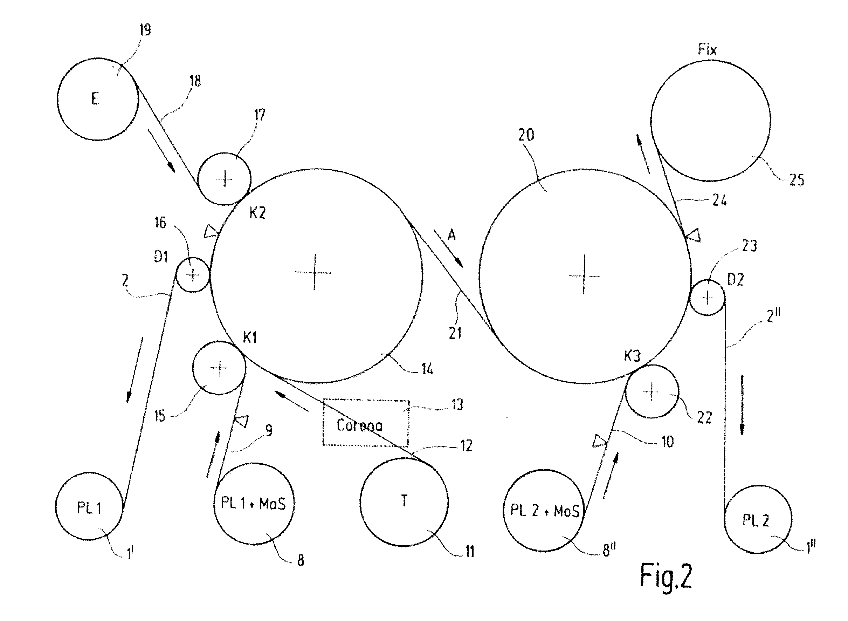

Gemäß Fig. 2, die eine erste Ausführungsform des Kaschierschrittes zeigt, wird das bandförmige Trägermaterial 12 von einer Vorratsrolle 11 abgewickelt, einer Corona-Behandlung 13 unterzogen und zu der ersten Kaschierwalze 14 geführt. Gleichzeitig wird das beschichtete erste Hilfsträgermaterial 9 von einer Vorratsrolle 8 abgewickelt und zu der Kaschierwalze 14 geführt. An der Kaschierwalze 14 werden das bandförmige Trägermaterial und das beschichtete erste Hilfsträgermaterial mittels der Auflegewalze 15 auf die erste Kaschierwalze 14 aufgelegt, wobei das bandförmige Trägermaterial 12 der ersten Kaschierwalze 14 zugewandt ist und die erste Kleberschicht 4 des beschichteten ersten Hilfsträgermaterials 9 dem bandförmigen Trägermaterial 12 zugewandt ist. In Bahnrichtung (Pfeil A) schließt sich nun die erste Delaminierwalze 16 an, mit der das Hilfsträgermaterial 2 von der ersten Kleberschicht delaminiert wird. Die Kleberschicht verbleibt auf dem bandförmigen Trägermaterial 12 und wird mit diesem weitergeführt, während das delaminierte erste Hilfsträgermaterial 2 auf eine weitere Vorratsrolle 1' aufgewickelt wird und dem Beschichtungs- und Trocknungsprozess (Fig. 1) erneut zugeführt werden kann.

Das mit der ersten Kleberschicht beschichtete bandförmige Trägermaterial 12 wird auf der ersten Kaschierwalze zu einer zweiten Auflegewalze 17 geführt. Mittels dieser Auflegewalze 17 wird das Eindeckmaterial 18, das von einer Vorratsrolle 19 abgewickelt wird, auf die erste Kleberschicht laminiert.

Das so erhaltene Laminat-Vorprodukt 21, das den Schichtaufbau bandförmiges Trägermaterial / erste Kleberschicht / Eindeckmaterial aufweist, wird nun von der ersten Kaschierwalze 14 zur zweiten Kaschierwalze 20 geführt, wobei nunmehr das Eindeckmaterial 18 der zweiten Kaschierwalze zugewandt ist. Die zweite Kaschierwalze 20 und die erste Kaschierwalze 14 sind parallel zueinander auf derselben Höhe angeordnet.

An der zweiten Kaschierwalze 20 schließt sich nun in Bahnrichtung die dritte Auflegewalze 22 an, mit der das beschichtete zweite Hilfsträgermaterial 10 auf die Oberfläche des bandförmigen Trägermaterials 12 laminiert wird, die nicht die erste Kleberschicht trägt. Dabei ist die zweite Kleberschicht des beschichteten zweiten Hilfsträgermaterials dem bandförmigen Trägermaterial 12 zugewandt. Das beschichtete zweite Hilfsträgermaterial 10 wird von einer Vorratsrolle 8" abgewickelt. In Bahnrichtung folgt nun die zweite Delaminierwalze 23, mit der das Hilfsträgermaterial 2" von der zweiten Kleberschicht delaminiert wird. Die zweite Kleberschicht verbleibt auf dem bandförmigen Trägermaterial 12 und wird mit diesem weitergeführt, während das delaminierte zweite Hilfsträgermaterial 2" auf eine weitere Vorratsrolle 1" aufgewickelt wird und dem Beschichtungs- und Trocknungsprozess (Fig. 1) erneut zugeführt werden kann. Das auf der zweiten Kaschierwalze verbliebene Laminat hat den Aufbau Eindeckmaterial / erste Kleberschicht / bandförmiges Trägermaterial / zweite Kleberschicht und stellt das fertige bandförmige Laminat, d. h. das Laminat-Endprodukt 24 dar, das auf eine Vorratsrolle 25 aufgewickelt wird.

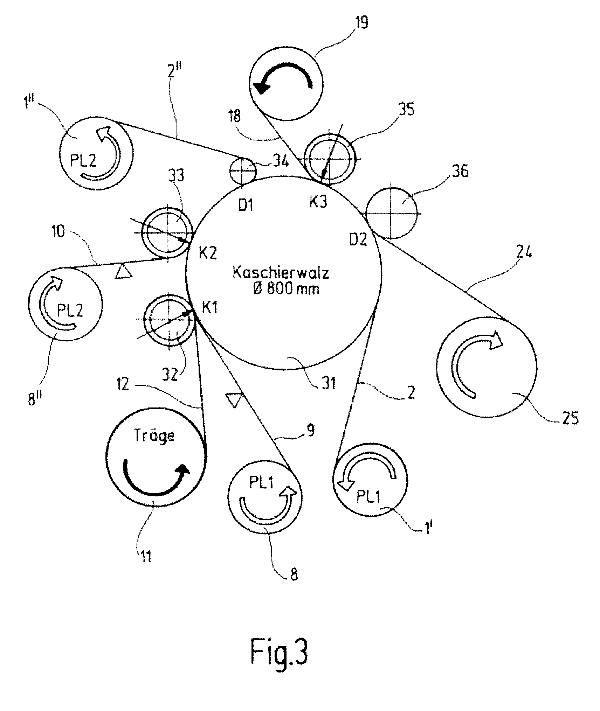

Fig. 3 zeigt eine zweite Ausführungsform des erfindungsgemäßen Kaschierschrittes, wobei nur eine Kaschierwalze 31 verwendet wird. Gemäß dieser Ausführungsform wird das beschichtete erste Hilfsträgermaterial 9 von einer Vorratsrolle 8 abgewickelt und zu der Kaschierwalze 31 geführt. Gleichzeitig wird das bandförmige Trägermaterial 12 von einer Vorratsrolle 11 abgewickelt und zu der Kaschierwalze 31 geführt. An der Kaschierwalze 31 werden das bandförmige Trägermaterial 12 und das beschichtete erste Hilfsträgermaterial 9 mittels der ersten Auflegewalze 32 auf die Kaschierwalze 31 aufgelegt, wobei das beschichtete erste Hilfsträgermaterial 9 der Kaschierwalze 31 zugewandt ist und dabei die erste Kleberschicht der Kaschierwalze 31 abgewandt ist und das bandförmige Trägermaterial 12 auf der ersten Kleberschicht 4 aufliegt.

In Bahnrichtung schließt sich nun die zweite Auflegewalze 33 an, mit der das beschichtete zweite Hilfsträgermaterial 10 auf die Oberfläche des bandförmigen Trägermaterials 12 laminiert wird, die nicht die erste Kleberschicht trägt. Dabei ist die zweite Kleberschicht des beschichteten zweiten Hilfsträgermaterials 10 dem bandförmigen Trägermaterial 12 zugewandt. Das beschichtete zweite Hilfsträgermaterial 10 wird von einer Vorratsrolle 8" abgewickelt. In Bahnrichtung folgt nun die erste Delaminierwalze 23, mit der das Hilfsträgermaterial 2" von der zweiten Kleberschicht delaminiert wird. Die zweite Kleberschicht verbleibt auf dem bandförmigen Trägermaterial 12 und wird mit diesem weitergeführt, während das delaminierte zweite Hilfsträgermaterial 2" auf eine weitere Vorratsrolle 1" aufgewickelt wird und dem Beschichtungs- und Trocknungsprozess (Fig. 1) erneut zugeführt werden kann.

Das Laminat-Vorprodukt mit dem Aufbau erstes Hilfsträgermaterial / erste Kleberschicht / bandförmiges Trägermaterial / zweite Kleberschicht / Eindeckmaterial wird auf der Kaschierwalze 31 zu einer dritten Auflegewalze 35 geführt. Mittels dieser Auflegewalze 35 wird das Eindeckmaterial 18, das von einer Vorratsrolle 19 abgewickelt wird, auf die zweite Kleberschicht laminiert.

In Bahnrichtung schließt sich nun die zweite Delaminierwalze 36 an, mit der das Hilfsträgermaterial 2 von der ersten Kleberschicht delaminiert wird. Die Kleberschicht verbleibt auf dem bandförmigen Trägermaterial 12 und wird mit diesem weitergeführt, während das delaminierte erste Hilfsträgermaterial 2 auf einer weiteren Vorratsrolle 1' aufgewickelt wird und dem Beschichtungs- und Trocknungsprozess (Fig. 1) erneut zugeführt werden kann.

Das so erhaltene Laminat 21 hat den Aufbau erste Kleberschicht / bandförmiges Trägermaterial / zweite Kleberschicht / Eindeckmaterial und stellt das fertige bandförmige Laminat, d. h. das Laminat-Endprodukt 24 dar, das auf eine Vorratsrolle 25 aufgewickelt wird.

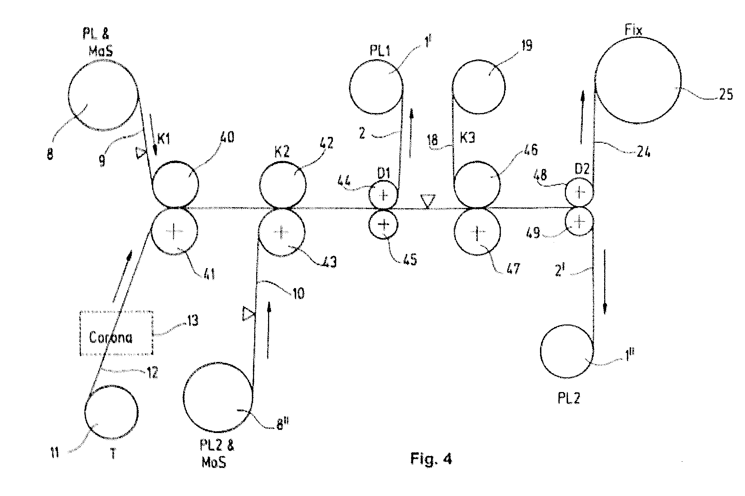

Fig. 4 zeigt eine dritte Ausführungsform des erfindungsgemäßen Kaschierprozesses. Bei dieser Ausführungsform wird das bandförmige Trägermaterial 12, das von seiner Vorratsrolle 11 abgewickelt wird, zunächst einer Corona-Behandelung unterzogen und dann gemeinsam mit dem beschichteten ersten Hilfsträgermaterial 9 zwischen einem ersten Walzenpaar 40, 41 laminiert, so dass die erste Kleberschicht zwischen dem ersten Hilfsträgermaterial 2 und dem bandförmigen Trägermaterial 1 angeordnet ist. Anschließend wird auf die unbeschichtete Seite des bandförmigen Trägermaterials 1 mittels eines in Bahnrichtung folgenden zweiten Walzenpaares 42, 43 das beschichtete zweite Hilfsträgermaterial 10 laminiert wird, wobei die zweite Kleberschicht zwischen dem zweiten Hilfsträgermaterial 2" und dem bandförmigen Trägermaterial 1 angeordnet ist.

Nun folgt in Bahnrichtung eine erste Dekaschierungseinrichtung, bestehend aus einem Walzenpaar 44, 45, mit deren Hilfe das erste Hilfsträgermaterial 2 von der ersten Haftklebemasse delaminiert wird. Dem schließt sich ein drittes Walzenpaar 46, 47 an, mit dem das Eindeckmaterial 18 auf die erste Kleberschicht laminiert wird. Am in Bahnrichtung letzten Walzenpaar 48, 49, d. h. der zweiten Dekaschierungseinrichtung, wird das verbliebene zweite Hilfsträgermaterial 2" delaminiert. Das erhaltene Laminat hat den Aufbau Eindeckmaterial / erste Kleberschicht / bandförmiges Trägermaterial / zweite Kleberschicht und stellt das fertige bandförmige Laminat, d. h. das Laminat-Endprodukt 24 dar, das auf eine Vorratsrolle 25 aufgewickelt wird.

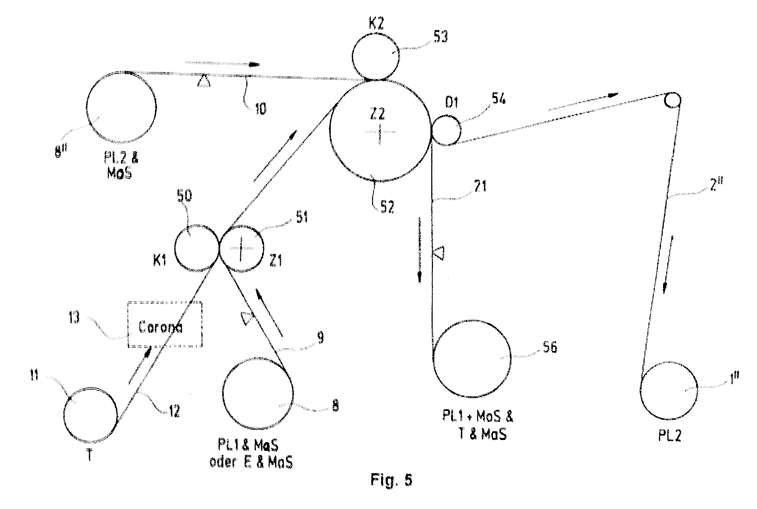

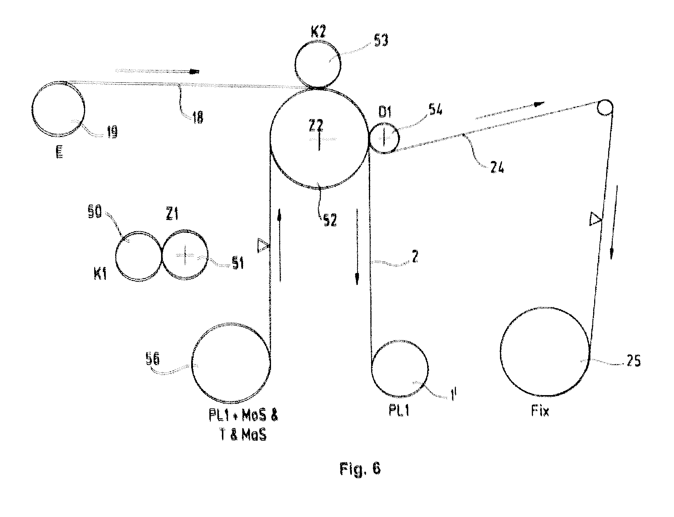

Die Fig. 5 und 6 zeigen eine vierte Ausführungsform des erfindungsgemäßen Kaschierprozesses, die zwei getrennte Verfahrensabschnitte umfasst. In Fig. 5, das den ersten Verfahrensabschnitt zeigt, wird mittels eines Walzenpaares 50, 51 das bandförmige Trägermaterial 12, das einer Corona-Behandlung 13 unterzogen wird, auf das beschichtete erste Hilfsträgermaterial 9 laminiert, und zwar so, dass die erste Kleberschicht dem bandförmigen Trägermaterial 12 zugewandt ist. Alternativ kann auch die Kleberschicht im vorgelagerten Beschichtungs- und Trocknungsprozess direkt auf das Eindeckmaterial (E & MaS) aufgebracht werden, wobei dann das Eindeckmaterial anstelle des Hilfsträgermaterials dem Walzenpaar 50, 51 zugeführt wird. Bei dieser Ausführungsalternative übernimmt somit das Eindeckmaterial die Funktion des Hilfsträgermaterials. Es wird daher kein gesondertes Hilfsträgermaterial benötigt.

Das erhaltene Laminat-Vorprodukt mit dem Schichtaufbau bandförmiges Trägermaterial / erste Kleberschicht / erstes Hilfsträgermaterial wird nun einer Kaschierwalze 52 zugeführt, wo mittels einer Auflegewalze 53 das beschichtete zweite Hilfsträgermaterial 10 auf die Oberfläche des bandförmigen Trägermaterials 1 laminiert wird, die nicht die erste Kleberschicht trägt, und zwar so, dass die zweite Kleberschicht dem bandförmigen Trägermaterial 12 zugewandt ist. In Bahnrichtung schließt sich an die Kaschierwalze 52 eine erste Delaminierwalze 54 an, mit der das zweite Hilfsträgermaterial von der zweiten Kleberschicht delaminiert wird. Das verbliebene Laminat-Vorprodukt 55 hat den Aufbau erstes Hilfsträgermaterial / erste Kleberschicht / bandförmiges Trägermaterial / zweite Kleberschicht und wird auf eine Vorratsrolle 56 aufgewickelt.

Im zweiten Verfahrensabschnitt, der in Fig. 6 gezeigt ist, werden die Kaschierwalze 52, die Auflagewalze 53 und die Delaminierwalze 56 genutzt, um das Eindeckmaterial 18 auf die zweite Kleberschicht zu laminieren. Dazu wird anstelle der im ersten Verfahrensabschnitt eingesetzten Vorratsrolle 8 die Vorratsrolle 56 mit dem Laminat-Vorprodukt 55 gesetzt. Von dort wird das Laminat-Vorprodukt 55 zu der Kaschierwalze 52 geführt. Mittels der Auflegewalze 53 wird das Eindeckmaterial 18, das von der Vorratsrolle 19, die anstelle der Vorratsrolle 8" für das beschichtete zweite Hilfsträgermaterial 10 gesetzt wurde, zugeführt wird, auf die zweite Kleberschicht laminiert. An der folgenden Delaminierwalze 54 wird das erste Hilfsträgermaterial 2 delaminiert und auf der Vorratsrolle 1' aufgewickelt. Die Vorratsrolle 1' ist dabei anstelle der Vorratsrolle für das Laminat-Vorprodukt getreten. Das erhaltene Laminat hat den Aufbau erste Kleberschicht / bandförmiges Trägermaterial / zweite Kleberschicht / Eindeckmaterial und stellt das fertige bandförmige Laminat, d. h. das Laminat-Endprodukt 24 dar, das auf eine Vorratsrolle 25 aufgewickelt wird.

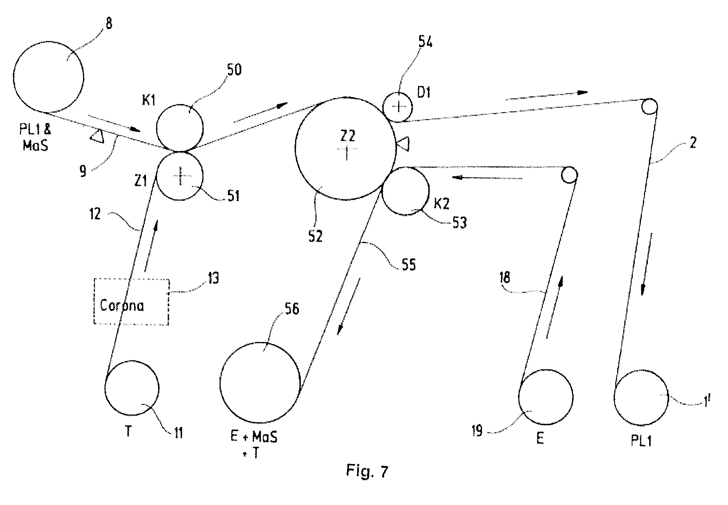

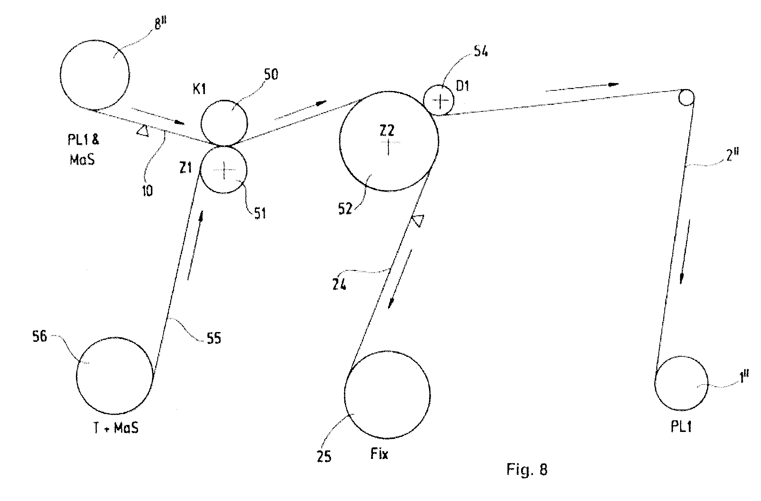

Die Fig. 7 und 8 zeigen eine fünfte Ausführungsform des erfindungsgemäßen Kaschierprozesses, die zwei getrennte Verfahrensabschnitte umfasst. In Fig. 7, das den ersten Verfahrensabschnitt zeigt, wird mittels eines Walzenpaares 50, 51 das bandförmige Trägermaterial 12, das einer Corona-Behandlung 13 unterzogen wird, auf das beschichtete erste Hilfsträgermaterial 9 laminiert, und zwar so, dass die erste Kleberschicht dem bandförmigen Trägermaterial 12 zugewandt ist. Das so erhaltene Laminat-Vorprodukt mit dem Schichtaufbau bandförmiges Trägermaterial / erste Kleberschicht / erstes Hilfsträgermaterial wird nun einer Kaschierwalze 52 zugeführt, wo mittels einer Delaminierwalze 54 das erste Hilfsträgermaterial von der ersten Kleberschicht delaminiert wird. Dem schließt sich an der Kaschierwalze 52 eine Auflegewalze 53 an, mit der das Eindeckmaterial 18 auf die Oberfläche des bandförmigen Trägermaterials 1 laminiert wird, die die erste Kleberschicht trägt. Das erhaltene Laminat-Vorprodukt 55 hat den Aufbau Eindeckmaterial / erste Kleberschicht / bandförmiges Trägermaterial und wird auf eine Vorratsrolle 56 aufgewickelt.

Im zweiten Verfahrensabschnitt, der in Fig. 8 gezeigt ist, werden die Kaschierwalze 52, die Auflagewalze 53 und die Delaminierwalze 56 genutzt, um das beschichtete zweite Hilfsträgermaterial 10 auf die Oberfläche des bandförmigen Trägermaterial 12 zu laminieren, die nicht die erste Kleberschicht trägt. Im gezeigten Fall haben das beschichtete erste Hilfsträgermaterial und das beschichtete zweite Hilfsträgermaterial denselben Aufbau und dieselbe Zusammensetzung.

Dazu wird anstelle der im ersten Verfahrensabschnitt eingesetzten Vorratsrolle 11 die Vorratsrolle 56 mit dem Laminat-Vorprodukt 55 gesetzt. Auf das Laminat-Vorprodukt 55 wird mittels des Walzenpaares 50, 51 das beschichtete zweite Hilfsträgermaterial 10 (das in diesem Fall dem beschichteten ersten Hilfsträgermaterial 9 gleicht) laminiert, und zwar so, dass die zweite Kleberschicht dem bandförmigen Trägermaterial 12 zugewandt ist. Dabei wird das beschichtete zweite Hilfsträgermaterial 10 von einer Vorratsrolle 8" abgewickelt, die an die Stelle der Vorratsrolle 8 gesetzt wurde. Da das beschichtete zweite Hilfsträgermaterial 10 in diesem Fall dem beschichteten ersten Hilfsträgermaterial 9 gleicht, ist ein Austausch der Vorratsrollen jedoch nicht erforderlich.

Das so erhaltene Laminat-Vorprodukt mit dem Schichtaufbau zweites Hilfsträgermaterial / zweite Kleberschicht / bandförmiges Trägermaterial / erste Kleberschicht / Eindeckmaterial wird nun der Kaschierwalze 52 zugeführt, wo mittels der Delaminierwalze 54 das zweite Hilfsträgermaterial 2" von der zweiten Kleberschicht delaminiert und auf die Vorratsrolle 1", die an die Stelle der Vorratsrolle 1' gesetzt wurde, was hier jedoch wegen der Gleichheit der beiden beschichteten Hilfsträgermaterialien nicht erforderlich ist, aufgewickelt wird. Das erhaltene Laminat hat den Aufbau erste Kleberschicht / bandförmiges Trägermaterial / zweite Kleberschicht / Eindeckmaterial und stellt das fertige bandförmige Laminat, d. h. das Laminat-Endprodukt 24 dar, das auf eine Vorratsrolle 25 aufgewickelt wird.

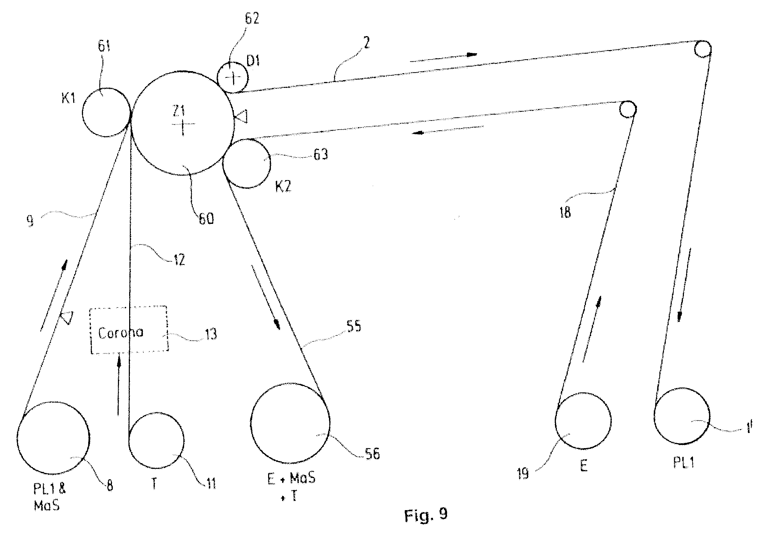

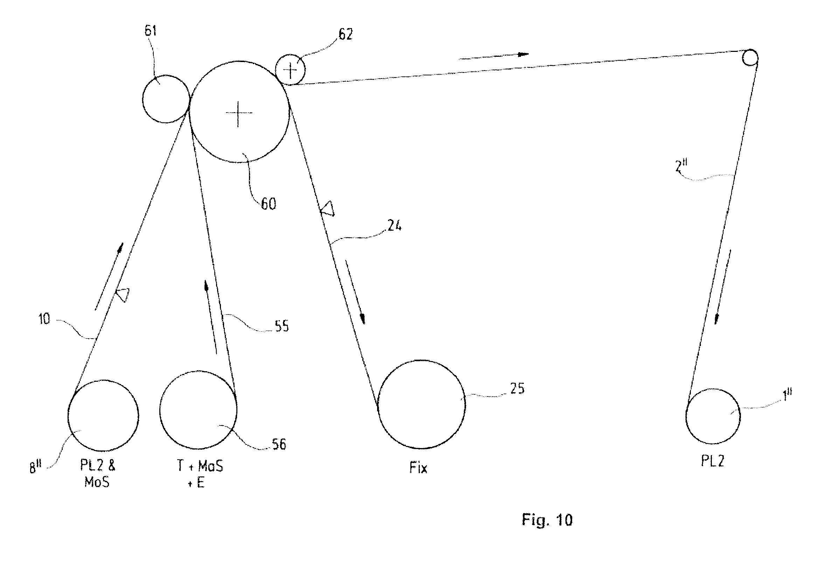

Die Fig. 9 und 10, die eine weitere Ausführungsform des Kaschierprozesses darstellen, stellen ebenfalls zwei Verfahrensabschnitte dar. Im ersten Verfahrensabschnitt, der in Fig. 9 gezeigt ist, werden das bandförmige Trägermaterial 12, das einer Corona-Behandlung 13 unterzogen wird, und das beschichtete erste Hilfsträgermaterial 9 mittels einer Auflagewalze 61 auf die Kaschierwalze 60 aufgelegt, und zwar so, dass das bandförmige Trägermaterial 12 der Kaschierwalze 60 zugewandt ist und die erste Kleberschicht dem bandförmigen Trägermaterial 12 zugewandt ist. Auf der Kaschierwalze 60 schließt sich nun die Delaminierwalze 62 an, mit deren Hilfe das erste Hilfsträgermaterial 2 von der ersten Kleberschicht delaminiert wird. Dann folgt auf der Kaschierwalze 57 eine zweite Auflegewalze 63, mit dem das Eindeckmaterial 18 auf die erste Kleberschicht laminiert wird. Das erhaltene Laminat-Vorprodukt 55 hat den Aufbau Eindeckmaterial / erste Kleberschicht / bandförmiges Trägermaterial und wird auf eine Vorratsrolle 56 aufgewickelt.

Im zweiten Verfahrensabschnitt, der in Fig. 10 gezeigt ist, werden die Kaschierwalze 60, die erste Auflagewalze 61 und die Delaminierwalze 62 genutzt, um das beschichtete zweite Hilfsträgermaterial 10 auf die Oberfläche des bandförmigen Trägermaterials 12 zu laminierten, die nicht die erste Kleberschicht trägt. Dazu wird anstelle der im ersten Verfahrensabschnitt eingesetzten Vorratsrolle 11 die Vorratsrolle 56 mit dem Laminat-Vorprodukt 55 gesetzt. Von dort wird das Laminat-Vorprodukt 55 zu der Kaschierwalze 60 geführt. Mittels der Auflegewalze 61 wird das beschichtete zweite Hilfsträgermaterial 10, das von der Vorratsrolle 8', die anstelle der Vorratsrolle 8 für das beschichtete erste Hilfsträgermaterial 9 gesetzt wurde, zugeführt und auf die Oberfläche des bandförmigen Trägermaterials 12 laminiert, die nicht die erste Kleberschicht trägt. An der folgenden Delaminierwalze 62 wird das erste Hilfsträgermaterial 2 delaminiert und auf die Vorratsrolle 1" aufgewickelt. Die Vorratsrolle 1" ist dabei an die Stelle der Vorratsrolle 1' gesetzt. Das erhaltene Laminat hat den Aufbau Eindeckmaterial / erste Kleberschicht / bandförmiges Trägermaterial / zweite Kleberschicht und stellt das fertige bandförmige Laminat, d. h. das Laminat-Endprodukt 24 dar, das auf eine Vorratsrolle 25 aufgewickelt wird.

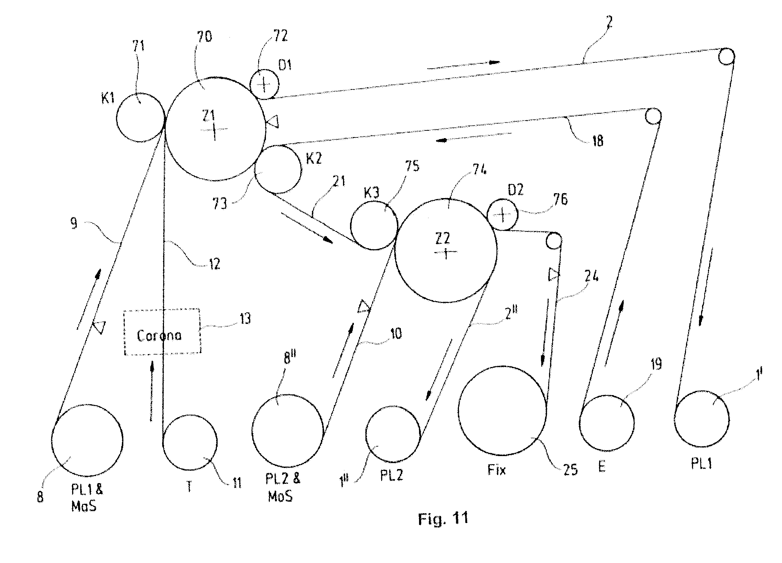

Fig. 11, das eine siebte Ausführungsform der Erfindung zeigt, umfasst nur einen Verfahrensabschnitt. Dabei wird das bandförmige Trägermaterial 12 von einer Vorratsrolle 11 abgewickelt, einer Corona-Behandlung 13 unterzogen und zu der ersten Kaschierwalze 70 geführt. Gleichzeitig wird das beschichtete erste Hilfsträgermaterial 9 von einer Vorratsrolle 8 abgewickelt und zu der Kaschierwalze 70 geführt. An der Kaschierwalze 70 werden das bandförmige Trägermaterial 12 und das beschichtete erste Hilfsträgermaterial 9 mittels der ersten Auflegewalze 71 auf die erste Kaschierwalze 70 aufgelegt, wobei das bandförmigen Trägermaterial 12 der ersten Kaschierwalze 70 zugewandt ist und die erste Kleberschicht des beschichteten ersten Hilfsträgermaterials 9 dem bandförmigen Trägermaterial 12 zugewandt ist. In Bahnrichtung schließt sich nun die erste Delaminierwalze 72 an, mit der das erste Hilfsträgermaterial 2 von der ersten Kleberschicht delaminiert wird. Die erste Kleberschicht verbleibt auf dem bandförmigen Trägermaterial 12 und wird mit diesem weitergeführt, während das delaminierte erste Hilfsträgermaterial 2 auf eine weiteren Vorratsrolle 1' aufgewickelt wird und dem Beschichtungs- und Trocknungsprozess (Fig. 1) erneut zugeführt werden kann.

Das mit der ersten Kleberschicht beschichtete bandförmige Trägermaterial 12 wird auf der ersten Kaschierwalze 70 zu einer zweiten Auflegewalze 73 geführt. Mittels dieser Auflegewalze 73 wird das Eindeckmaterial 18, das von einer Vorratsrolle 19 abgewickelt wird, auf die erste Kleberschicht laminiert.

Das so erhaltene Laminat-Vorprodukt 21, das den Schichtaufbau bandförmiges Trägermaterial / erste Kleberschicht / Eindeckmaterial aufweist, wird nun von der ersten Kaschierwalze 70 zur zweiten Kaschierwalze 74 geführt. Dort wird das Laminat-Vorprodukt 21 mittels einer dritten Auflegewalze 75 auf das der dritten Auflegewalze 75 gleichzeitig zugeführte beschichtete zweite Hilfsträgermaterial 10 aufgelegt, wobei das beschichtete zweite Hilfsträgermaterial 10 der zweiten Kaschierwalze 74 zugewandt ist und die zweite Kleberschicht der zweiten Kaschierwalze 74 abgewandt und dem bandförmigen Trägermaterial 12 des Laminat-Vorproduktes 21 zugewandt ist. Die zweite Kaschierwalze 74 und die erste Kaschierwalze 70 sind parallel zueinander, aber in unterschiedlicher Höhe angeordnet, und zwar Kaschierwalze 70 oberhalb von Kaschierwalze 74.

An der zweiten Kaschierwalze 20 schließt sich nun in Bahnrichtung die zweite Delaminierwalze 76 an, mit der das Hilfsträgermaterial 2" von der zweiten Kleberschicht delaminiert wird. Die zweite Kleberschicht verbleibt auf dem bandförmigen Trägermaterial 12 und wird mit diesem weitergeführt, während das delaminierte zweite Hilfsträgermaterial 2" auf eine weitere Vorratsrolle 1" aufgewickelt wird und dem Beschichtungs- und Trocknungsprozess (Fig. 1) erneut zugeführt werden kann. Das auf der zweiten Kaschierwalze verbliebene Laminat hat den Aufbau Eindeckmaterial / erste Kleberschicht / bandförmiges Trägermaterial / zweite Kleberschicht und stellt das fertige bandförmige Laminat, d. h. das Laminat-Endprodukt 24 dar, das auf eine Vorratsrolle 25 aufgewickelt wird.

### Beispiel 1

Herstellung eines doppelseitigen Klebebandes gemäß der in Fig. 4 gezeigten Ausführungsform:

Zur Herstellung des doppelseitigen Klebebandes wird von einer 12 µm dicken PET-Folie als Trägermaterial ausgegangen. Für eine gute Klebemasseverankerung wird die PET-Folie zunächst beidseitig Corona vorbehandelt. Dann wird mittels eines Walzenpaares ein erstes Hilfsträgermaterial auf das Trägermaterial laminiert. Als Hilfsträgermaterial wird eine beidseitig silikonisierte MOPP-Folie in einer Stärke von 100 µm verwendet, die einseitig mit einer Klebemasse in der Stärke 100 g/m² beschichtet worden ist. In einem weiteren Schritt wird ein zweites Hilfsträgermaterial, das identisch zum ersten Hilfsträgermaterial ist, auf die andere Seite des Trägermaterials laminiert. Daraufhin wird mit Hilfe eines weiteren Walzenpaares das erste Hilfsträgermaterial von der ersten Haftklebemasse delaminiert und anschließend wird ein Eindeckmaterial auf die delaminierte Seite auflaminiert. Für das Eindeckmaterial wird eine silikonisierte MOPP-Folie in der Stärke 80 µm verwendet. In einem letzten Schritt wird nunmehr mittels eines weiteren Walzenpaares das zweite Hilfsträgermaterial delaminiert und gleichzeitig das erhaltene Laminat (doppelseitiges Klebeband) auf eine Vorratsrolle aufgewickelt.

### Bezugszeichenliste

- 1: Vorratsrolle für Hilfsträgermaterial 2
- 2: erstes Hilfsträgermaterial
- 2": zweites Hilfsträgermaterial
- 3: Klebemasse
- 4: Kleberschicht
- 5,6: Walzenpaar
- 7: Trockner
- 8: Vorratsrolle für das beschichtete erste Hilfsträgermaterial 9
- 8": Vorratsrolle für das beschichtete zweite Hilfsträgermaterial 10
- 9: beschichtetes erstes Hilfsträgermaterial
- 10: beschichtetes zweites Hilfsträgermaterial
- 11: Vorratsrolle für das bandförmige Trägermaterial
- 12: bandförmiges Trägermaterial
- 13: Corona-Behandlung
- 14: erste Kaschierwalze
- 15: erste Auflegewalze
- 16: erste Delaminierwalze
- 17: zweite Auflegewalze
- 18: Eindeckmaterial
- 19: Vorratsrolle für das Eindeckmaterial
- 20: zweite Kaschierwalze
- 21: Laminat-Vorprodukt
- 22: dritte Auflegewalze
- 23: zweite Delaminierwalze
- 24: Laminat-Endprodukt
- 25: Vorratsrolle für das Laminat-Endprodukt

- 31: Kaschierwalze
- 32: erste Auflegewalze
- 33: zweite Auflegewalze
- 34: erste Delaminierwalze
- 35: dritte Auflegewalze
- 36: zweite Delaminierwalze
- 40, 41: erstes Walzenpaar
- 42, 43: zweites Walzenpaar
- 44, 45: erste Dekaschierungseinrichtung
- 46, 47: drittes Walzenpaar
- 48, 49: zweite Dekaschierungseinrichtung

- 50, 51: Walzenpaar
- 52: Kaschierwalze
- 53: Auflegewalze
- 54: Delaminierwalze
- 55: Laminat-Vorprodukt
- 56: Vorratsrolle für das Laminat-Vorprodukt

- 60: Kaschierwalze
- 61: erste Auflegewalze
- 62: Delaminierwalze
- 63: zweite Auflegewalze

- 70: erste Kaschierwalze
- 71: erste Auflegewalze
- 72: erste Delaminierwalze
- 73: zweite Auflegewalze
- 74: zweite Kaschierwalze
- 75: dritte Auflegewalze
- 76: zweite Delaminierwalze

- T: bandförmiges Trägermaterial 1
- PL: Hilfsträgermaterial 2, 2" ( = Prozessliner)
- PL1: erstes Hilfsträgermaterial 2 ( = Prozessliner ohne Kleberschicht)
- PL1+MaS: beschichtetes erstes Hilfsträgermaterial 9 (= Prozessliner mit erster Kleberschicht beschichtet)
- PL2: zweites Hilfsträgermaterial 2" ( = Prozessliner ohne Kleberschicht)
- PL2+MaS: beschichtetes zweites Hilfsträgermaterial 20 (= Prozessliner mit zweiter Kleberschicht beschichtet)
- E: Eindeckmaterial 18 ( = Endkundenliner)
- tesa: bandförmiges Laminat ( = Laminat-Endprodukt)
- K: Kaschierpunkt (K1 = Kaschierpunkt 1 , K2 = Kaschierpunkt 2 usw.)
- D: Dekaschierpunkt (D1 = Dekaschierpunkt 1 , D2 = Dekaschierpunkt 2 usw.)

## Patentansprüche

1. Verfahren zur Herstellung eines bandförmigen Laminats (24), das ein bandförmiges Trägermaterial (12) und auf zumindest einer der Oberflächen des bandförmigen Trägermaterials (12) eine erste Kleberschicht (4) umfasst, wobei das Verfahren die Schritte
(a) Beschichten eines ersten bandförmigen Hilfsträgermaterials (2) mit zumindest der ersten Kleberschicht (4) und Aufwickeln des beschichteten ersten Hilfsträgermaterials (9) auf eine erste Rolle (8);
(b) Abwickeln des beschichteten ersten bandförmigen Hilfsträgermaterials (9) von der ersten Rolle (8) und Führen des beschichteten ersten bandförmigen Hilfsträgermaterials (9) zu einer ersten Kaschierwalze (14);
(c) Laminieren des beschichteten ersten bandförmigen Hilfsträgermaterials (9) auf das bandförmige Trägermaterial (1), so dass die erste Kleberschicht (4) dem bandförmigen Trägermaterial (12) zugewandt ist; und
(d) Delaminieren des ersten Hilfsträgermaterials (2) von der ersten Kleberschicht (4);
(e) Beschichten eines zweiten bandförmigen Hilfsträgermaterials (10) mit zumindest einer zweiten Kleberschicht und das Aufwickeln des beschichteten zweiten Hilfsträgermaterials (10) auf eine zweite Rolle (8");
(f) Abwickeln des beschichteten zweiten bandförmigen Hilfsträgermaterials (10) von der zweiten Rolle (8") und Führen des beschichteten zweiten bandförmigen Hilfsträgermaterials (10) zu der ersten Kaschierwalze (14) oder zu einer zweiten Kaschierwalze (20);
(g) Laminieren des beschichteten zweiten bandförmigen Hilfsträgermaterials (10) auf das bandförmige Trägermaterial (12), so dass die zweite Kleberschicht dem bandförmigen Trägermaterial (12) zugewandt ist; und
(h) Delaminieren des zweiten Hilfsträgermaterials (2") von der zweiten Kleberschicht;
umfasst.

2. Verfahren nach Anspruch 1, **dadurch gekennzeichnet, dass** die Schritte (a) und (e) unabhängig voneinander vor den Schritten (b) bis (f) ausgeführt werden.

3. Verfahren nach Anspruch 1 oder Anspruch 2, **dadurch gekennzeichnet, dass** die Schritte (c), (d), (g) und (h) auf einer Kaschierwalze oder zwei Kaschierwalzen ausgeführt werden.

4. Verfahren nach einem der vorstehenden Ansprüche, **dadurch gekennzeichnet, dass** auf die erste Kleberschicht (4) im Anschluss an Schritt (d) ein bandförmiges Eindeckmaterial (18) kaschiert wird.

5. Verfahren nach Anspruch 4, **dadurch gekennzeichnet, dass** das bandförmige Eindeckmaterial (19) auf der ersten Kaschierwalze (14) auf die erste Kleberschicht (4) kaschiert wird.

6. Verfahren nach einem der Ansprüche 1 bis 5, **dadurch gekennzeichnet, dass**
- mittels einer ersten Auflegewalze (15) das bandförmige Trägermaterial (1) auf die erste Kaschierwalze (14) aufgelegt wird und auf das bandförmige Trägermaterial (12) das beschichtete erste Hilfsträgermaterial (9) aufgelegt wird, wobei die erste Kleberschicht (4) dem bandförmigen Trägermaterial (1) zugewandt ist;
- mittels einer in Bahnrichtung folgenden ersten Dekaschierungseinrichtung (16) das erste Hilfsträgermaterial (2) von der ersten Kleberschicht (4) delaminiert wird;
- mittels einer in Bahnrichtung folgenden zweiten Auflegewalze (17) das Eindeckmaterial (18) auf die erste Kleberschicht (4) laminiert wird;
- das bandförmige Trägermaterial (12), das auf einer Oberfläche mit der Kleberschicht (4) und darauf mit dem Eindeckmaterial (17) laminiert ist, von der ersten Kaschierwalze (14) abgenommen und auf eine zweite Kaschierwalze (20) aufgelegt wird, wobei das Eindeckmaterial (17) der zweiten Kaschierwalze (20) zugewandt ist; und
- mittels einer in Bahnrichtung folgenden dritten Auflegewalze (22) auf das bandförmige Trägermaterial das beschichtete zweite Hilfsträgermaterial (10) aufgelegt wird, wobei die zweite Kleberschicht dem bandförmigen Trägermaterial (12) zugewandt ist; und
- mittels einer in Bahnrichtung folgenden zweiten Dekaschierungseinrichtung (23) das zweite Hilfsträgermaterial (2") von der zweiten Kleberschicht delaminiert wird.

7. Verfahren nach einem der Ansprüche 1 bis 5, **dadurch gekennzeichnet, dass**
- mittels einer ersten Auflegewalze (32) das beschichtete erste Hilfsträgermaterial (9) auf die erste Kaschierwalze (31) aufgelegt wird, so dass die erste Kleberschicht (4) der Kaschierwalze (31) abgewandt ist, und das bandförmige Trägermaterial (12) auf die erste Kleberschicht (4) aufgelegt wird;
- mittels einer in Bahnrichtung folgenden zweiten Auflegewalze (33) auf das bandförmige Trägermaterial (12) das beschichtete zweite Hilfsträgermaterial (10) aufgelegt wird, wobei die zweite Kleberschicht dem bahnförmigen Trägermaterial (12) zugewandt ist; j
- mittels einer in Bahnrichtung folgenden ersten Dekaschierungseinrichtung (34) das zweite Hilfsträgermaterial (2") von der zweiten Kleberschicht delaminiert wird;
- mittels einer in Bahnrichtung folgenden dritten Auflegewalze (35) das Eindeckmaterial (18) auf die zweite Kleberschicht laminiert wird;
- mittels einer in Bahnrichtung folgenden zweiten Dekaschierungseinrichtung (36) das erste Hilfsträgermaterial (2) von der ersten Kleberschicht (4) delaminiert wird.

8. Verfahren nach einem der Ansprüche 1 bis 5, **dadurch gekennzeichnet, dass**
- das beschichtete erste Hilfsträgermaterial (9) und das bandförmige Trägermaterial (12) zwischen einem ersten Walzenpaar (40, 41) laminiert werden, so dass die erste Kleberschicht (4) zwischen dem ersten Hilfsträgermaterial (2) und dem bandförmigen Trägermaterial (12) angeordnet ist;
- auf die unbeschichtete Oberfläche des bandförmigen Trägermaterials (1) mittels eines in Bahnrichtung folgenden zweiten Walzenpaares (42, 43) das beschichtete zweite Hilfsträgermaterial (10) laminiert wird, wobei die zweite Kleberschicht zwischen dem zweiten Hilfsträgermaterial (2") und dem bandförmigen Trägermaterial (1) angeordnet ist;
- eines der beiden Hilfsträgermaterialien (2, 2") mittels einer in Bahnrichtung folgenden ersten Dekaschierungseinrichtung (44, 45) delaminiert wird;
- das Eindeckmaterial (18) mittels eines in Bahnrichtung folgenden dritten Walzenpaares (46, 47) auf die freiliegende erste oder zweite Kleberschicht laminiert wird; und
- das verbliebene Hilfsträgermaterial (2", 2) mittels einer in Bahnrichtung folgenden zweiten Dekaschierungseinrichtung (48, 49) delaminiert wird.

9. Verfahren nach einem der Ansprüche 1 bis 5, **dadurch gekennzeichnet, dass**
- in einem ersten Verfahrensabschnitt ein Laminat-Vorprodukt (55) mit der Schichtfolge erstes Hilfsträgermaterial/erste Kleberschicht/ bandförmiges Trägermaterial/zweite Kleberschicht hergestellt wird und das Laminat-Vorprodukt (55) auf eine Rolle (56) aufgewickelt wird; und
- in einem zweiten Verfahrensschritt das Laminat-Vorprodukt (55) von der Rolle (56) abgewickelt und auf die zweite Kleberschicht das Eindeckmaterial (18) unter Erhalt des Laminat-Endproduktes (24) laminiert wird.

10. Verfahren nach einem der Ansprüche 1 bis 5, **dadurch gekennzeichnet, dass**
- in einem ersten Verfahrensabschnitt ein Laminat-Vorprodukt (55) mit der Schichtfolge bandförmiges Trägermaterial/zweite Kleberschicht/ Eindeckmaterial hergestellt wird und das Laminat-Vorprodukt (55) auf eine Walze (56) aufgewickelt wird; und
- in einem zweiten Verfahrensschritt das Laminat-Vorprodukt (55) von der Walze (56) abgewickelt und auf die unbeschichtete Oberfläche des bandförmigen Trägermaterials (12) das beschichtete erste Hilfsträgermaterial (9) laminiert wird und die erste Kleberschicht (4) in einer in Bahnrichtung folgenden Dekaschierungseinrichtung unter Erhalt des Laminat-Endproduktes (24) delaminiert wird.

11. Verfahren nach einem der vorstehenden Ansprüche, **dadurch gekennzeichnet, dass** das bandförmige Trägermaterial (12) vor dessen Laminierung einer Corona-Behandlung (13) unterzogen wird.

12. Verfahren nach einem der vorstehenden Ansprüche, **dadurch gekennzeichnet, dass** die erste Kleberschicht (4) und die zweite Kleberschicht gleich oder unterschiedlich sein können.

13. Verfahren nach einem der vorstehenden Ansprüche, **dadurch gekennzeichnet, dass** das erste Hilfsträgermaterial (2) und das zweite Hilfsträgermaterial (2") gleich oder unterschiedlich sein können.

14. Verfahren nach einem der vorstehenden Ansprüche, **dadurch gekennzeichnet, dass** das erste und/oder das zweite Hilfsträgermaterial (2, 10) derart ausgebildet sind, dass es mehrfach, bevorzugt 5 bis 10 mal, besonders bevorzugt 7 bis 8 mal, für das Verfahren verwendbar ist.

## Claims

1. Method for producing a tapelike laminate (24) which comprises a tapelike carrier material (12) and, on at least one of the surfaces of the tapelike carrier material (12), a first adhesive layer (4), said method comprising the steps of
(a) coating a first tapelike auxiliary carrier material (2) with at least the first adhesive layer (4), and winding the coated first auxiliary carrier material (9) onto a first roll (8);
(b) unwinding the coated first tapelike auxiliary carrier material (9) from the first roll (8), and guiding the coated first tapelike auxiliary carrier material (9) to a first laminating roller (14);
(c) laminating the coated first tapelike auxiliary carrier material (9) onto the tapelike carrier material (1), so that the first adhesive layer (4) is facing the tapelike carrier material (12); and
(d) delaminating the first auxiliary carrier material (2) from the first adhesive layer (4) ;
(e) coating a second tapelike auxiliary carrier material (10) with at least one second adhesive layer, and winding the coated second auxiliary carrier material (10) onto a second roll (8");
(f) unwinding the coated second tapelike auxiliary carrier material (10) from the second roll (8"), and guiding the coated second tapelike auxiliary carrier material (10) to the first laminating roller (14) or to a second laminating roller (20);
(g) laminating the coated second tapelike auxiliary carrier material (10) onto the tapelike carrier material (12), so that the second adhesive layer is facing the tapelike carrier material (12); and
(h) delaminating the second auxiliary carrier material (2") from the second adhesive layer.

2. Method according to Claim 1, **characterized in that** steps (a) and (e) are performed, independently of one another, before steps (b) to (f).

3. Method according to Claim 1 or Claim 2, **characterized in that** steps (c), (d), (g) and (h) are performed on a laminating roller or two laminating rollers.

4. Method according to any of the preceding claims, **characterized in that** a tapelike liner material (18) is laminated onto the first adhesive layer (4) following step (d).

5. Method according to Claim 4, **characterized in that** the tapelike liner material (19) is laminated onto the first adhesive layer (4) on the first laminating roller (14).

6. Method according to any of Claims 1 to 5, **characterized in that**
- by means of a first lay-on roller (15), the tapelike carrier material (1) is laid onto the first laminating roller (14), and the coated first auxiliary carrier material (9) is laid onto the tapelike carrier material (12), with the first adhesive layer (4) facing the tapelike carrier material (1);
- by means of a first delaminating device (16) following in web direction, the first auxiliary carrier material (2) is delaminated from the first adhesive layer (4);
- by means of a second lay-on roller (17) following in web direction, the liner material (18) is laminated onto the first adhesive layer (4) ;
- the tapelike carrier material (12), which is laminated on one surface with the adhesive layer (4) and thereupon with the liner material (17), is taken from the first laminating roller (14) and laid onto a second laminating roller (20), with the liner material (17) facing the second laminating roller (20); and
- by means of a third lay-on roller (22) following in web direction, the coated second auxiliary carrier material (10) is laid onto the tapelike carrier material, with the second adhesive layer facing the tapelike carrier material (12); and
- by means of a second delaminating device (23) following in web direction, the second auxiliary carrier material (2") is delaminated from the second adhesive layer.

7. Method according to any of Claims 1 to 5, **characterized in that**
- by means of a first lay-on roller (32), the coated first auxiliary carrier material (9) is laid onto the first laminating roller (31), so that the first adhesive layer (4) faces away from the laminating roller (31), and the tapelike carrier material (12) is laid onto the first adhesive layer (4);
- by means of a second lay-on roller (33) following in web direction, the coated second auxiliary carrier material (10) is laid onto the tapelike carrier material (12), with the second adhesive layer facing the weblike carrier material (12);
- by means of a first delaminating device (34) following in web direction, the second auxiliary carrier material (2") is delaminated from the second adhesive layer;
- by means of a third lay-on roller (35) following in web direction, the liner material (18) is laminated onto the second adhesive layer;
- by means of a second delaminating device (36) following in web direction, the first auxiliary carrier material (2) is delaminated from the first adhesive layer (4).

8. Method according to any of Claims 1 to 5, **characterized in that**
- the coated first auxiliary carrier material (9) and the tapelike carrier material (12) are laminated between a first roller pair (40, 41), so that the first adhesive layer (4) is disposed between the first auxiliary carrier material (2) and the tapelike carrier material (12);
- by means of a second roller pair (42, 43) following in web direction, the coated second auxiliary carrier material (10) is laminated onto the uncoated surface of the tapelike carrier material (1), the second adhesive layer being disposed between the second auxiliary carrier material (2") and the tapelike carrier material (1);
- one of the two auxiliary carrier materials (2, 2") is delaminated by means of a first delaminating device (44, 45) following in web direction;
- the liner material (18) is laminated onto the exposed first or second adhesive layer by means of a third roller pair (46, 47) following in web direction; and
- the remaining auxiliary carrier material (2", 2) is delaminated by means of a second delaminating device (48, 49) following in web direction.

9. Method according to any of Claims 1 to 5, **characterized in that**
- in a first method section, a laminate precursor (55) with the layer sequence first auxiliary carrier material/first adhesive layer/tapelike carrier material/second adhesive layer is produced, and the laminate precursor (55) is wound onto a roll (56); and
- in a second method step, the laminate precursor (55) is unwound from the roll (56), and the liner material (18) is laminated onto the second adhesive layer to give the laminate end product (24).

10. Method according to any of Claims 1 to 5, **characterized in that**
- in a first method section, a laminate precursor (55) with the layer sequence tapelike carrier material/second adhesive layer/liner material is produced, and the laminate precursor (55) is wound onto a roller (56); and
- in a second method step, the laminate precursor (55) is unwound from the roller (56), and the coated first auxiliary carrier material (9) is laminated onto the uncoated surface of the tapelike carrier material (12), and the first adhesive layer (4) is delaminated in a delaminating device following in web direction, to give the laminate end product (24).

11. Method according to any of the preceding claims, **characterized in that** the tapelike carrier material (12), prior to its lamination, is subjected to a corona treatment (13).

12. Method according to any of the preceding claims, **characterized in that** the first adhesive layer (4) and the second adhesive layer may be identical or different.

13. Method according to any of the preceding claims, **characterized in that** the first auxiliary carrier material (2) and the second auxiliary carrier material (2") may be identical or different.

14. Method according to any of the preceding claims, **characterized in that** the first and/or second auxiliary carrier materials (2, 10) are designed such that each can be used multiply, preferably 5 to 10 times, more preferably 7 to 8 times, for the method.

## Revendications

1. Procédé pour la fabrication d'un stratifié (24) en forme de bande, qui comprend un matériau support (12) en forme de bande et une première couche adhésive (4) sur au moins une des surfaces du matériau support (12) en forme de bande, le procédé comprenant les étapes consistant à
(a) revêtir un premier matériau support auxiliaire (2) en forme de bande par au moins une première couche adhésive (4) et enrouler le premier matériau support auxiliaire (9) revêtu sur un premier rouleau (8) ;
(b) dérouler le premier matériau support auxiliaire (9) en forme de bande, revêtu, du premier rouleau (8) et guider le premier matériau support auxiliaire (9) en forme de bande, revêtu, vers un premier cylindre de doublage (14) ;
(c) stratifier le premier matériau support auxiliaire (9) en forme de bande, revêtu, sur le matériau support (1) en forme de bande de telle sorte que la première couche adhésive (4) est tournée vers le matériau support (12) en forme de bande ; et
(d) délaminer le premier matériau support auxiliaire (2) de la première couche adhésive (4) ;
(e) revêtir un deuxième matériau support auxiliaire (10) en forme de bande par au moins une deuxième couche adhésive et enrouler le deuxième matériau support auxiliaire (10) revêtu sur un deuxième rouleau (8") ;
(f) dérouler le deuxième matériau support auxiliaire (10) en forme de bande, revêtu, du deuxième rouleau (8") et guider le deuxième matériau support auxiliaire (10) en forme de bande, revêtu, vers le premier cylindre de doublage (14) ou vers un deuxième cylindre de doublage (20) ;
(g) stratifier le deuxième matériau support auxiliaire (10) en forme de bande, revêtu, sur le matériau support (12) en forme de bande de telle sorte que la deuxième couche adhésive est tournée vers le matériau support (12) en forme de bande ; et
(h) délaminer le deuxième matériau support auxiliaire (2") de la deuxième couche adhésive.

2. Procédé selon la revendication 1, **caractérisé en ce que** les étapes (a) et (e) sont réalisées indépendamment l'une de l'autre avant les étapes (b) à (f).

3. Procédé selon la revendication 1 ou la revendication 2, **caractérisé en ce que** les étapes (c), (d), (g) et (h) sont réalisées sur un cylindre de doublage ou sur deux cylindres de doublage.

4. Procédé selon l'une quelconque des revendications précédentes, **caractérisé en ce qu'**un matériau de couverture (18) en forme de bande est doublé sur la première couche adhésive (4) après l'étape (d).

5. Procédé selon la revendication 4, **caractérisé en ce que** le matériau de couverture (19) en forme de bande est doublé sur la première couche adhésive (4) sur le premier cylindre de doublage (14).

6. Procédé selon l'une quelconque des revendications 1 à 5, **caractérisé en ce que**
- le matériau support (1) en forme de bande est appliqué au moyen d'un premier cylindre d'application (15) sur le premier cylindre de doublage (14) et le premier matériau support auxiliaire (9), revêtu, est appliqué sur le matériau support (12) en forme de bande, la première couche adhésive (4) étant tournée vers le matériau support (1) en forme de bande ;
- le premier matériau support auxiliaire (2) est délaminé de la première couche adhésive (4) au moyen d'un premier dispositif (16) de décollement consécutif dans le sens de la bande ;
- le matériau de couverture (18) est stratifié sur la première couche adhésive (4) au moyen d'un deuxième cylindre d'application (17) consécutif dans le sens de la bande ;
- le matériau support (12) en forme de bande qui est stratifié sur une surface avec la couche adhésive (4) et, sur celle-ci, avec le matériau de couverture (17), est enlevé du premier cylindre de doublage (14) et appliqué sur un deuxième cylindre de doublage (20), le matériau de couverture (17) étant tourné vers le deuxième cylindre de doublage (20) ; et
- le deuxième matériau support auxiliaire (10), revêtu, est appliqué sur le matériau support en forme de bande au moyen d'un troisième cylindre d'application (22) consécutif dans le sens de la bande, la deuxième couche adhésive étant tournée vers le matériau support (12) en forme de bande ; et
- le deuxième matériau support auxiliaire (2") est délaminé de la deuxième couche adhésive au moyen d'un deuxième dispositif (23) de décollement consécutif dans le sens de la bande.

7. Procédé selon l'une quelconque des revendications 1 à 5, **caractérisé en ce que**
- le premier matériau support auxiliaire (9), revêtu, est appliqué au moyen d'un premier cylindre d'application (32) sur le premier cylindre de doublage (31) de telle sorte que la première couche adhésive (4) est à l'opposé du cylindre de doublage (31) et le matériau support (12) en forme de bande est appliqué sur la première couche adhésive (4) ;
- le deuxième matériau support auxiliaire (10), revêtu, est appliqué sur le matériau support (12) en forme de bande au moyen d'un deuxième cylindre d'application (33) consécutif dans le sens de la bande, la deuxième couche adhésive étant tournée vers le matériau support (12) en forme de nappe ;
- le deuxième matériau support auxiliaire (2") est délaminé de la deuxième couche adhésive au moyen d'un premier dispositif (34) de décollement consécutif dans le sens de la bande ;
- le matériau de couverture (18) est stratifié sur la deuxième couche adhésive au moyen d'un troisième cylindre d'application (35) consécutif dans le sens de la bande ;
- le premier matériau support auxiliaire (2) est délaminé de la première couche adhésive (4) au moyen d'un deuxième dispositif de décollement (36) consécutif dans le sens de la bande.

8. Procédé selon l'une quelconque des revendications 1 à 5, **caractérisé en ce que**
- le premier matériau support auxiliaire (9) revêtu et le matériau support (12) en forme de bande sont stratifiés entre une première paire de cylindres (40, 41) de manière telle que la première couche adhésive (4) est disposée entre le premier matériau support auxiliaire (2) et le matériau support (12) en forme de bande ;
- le deuxième matériau support auxiliaire (10) revêtu est stratifié sur la surface non revêtue du matériau support (1) en forme de bande au moyen d'une deuxième paire de cylindres (42, 43) consécutive dans le sens de la bande, la deuxième couche adhésive étant disposée entre le deuxième matériau support auxiliaire (2") et le matériau support (1) en forme de bande ;
- un des deux matériaux support auxiliaires (2, 2") est délaminé au moyen d'un premier dispositif de décollement (44, 45) consécutif dans le sens de la bande ;
- le matériau de couverture (18) est stratifié sur la première ou la deuxième couche adhésive libre au moyen d'une troisième paire de cylindres (46, 47) consécutive dans le sens de la bande ; et
- le matériau support auxiliaire (2", 2) qui reste est délaminé au moyen d'un deuxième dispositif de décollement (48, 49) consécutif dans le sens de la bande.

9. Procédé selon l'une quelconque des revendications 1 à 5, **caractérisé en ce que**
- dans une première section de procédé, on prépare un précurseur (55) de stratifié présentant l'ordre des couches premier matériau support auxiliaire/première couche adhésive/matériau support en forme de bande/deuxième couche adhésive et le précurseur (55) de stratifié est enroulé sur un rouleau (56) ; et
- dans une deuxième étape de procédé, on déroule le précurseur (55) de stratifié du rouleau (56) et on stratifié le matériau de couverture (18) sur la deuxième couche adhésive avec obtention du produit fini (24) stratifié.

10. Procédé selon l'une quelconque des revendications 1 à 5, **caractérisé en ce que**
- dans une première section de procédé, on prépare un précurseur (55) de stratifié présentant l'ordre des couches matériau support en forme de bande/deuxième couche adhésive/matériau de couverture et le précurseur (55) de stratifié est enroulé sur un cylindre (56) ; et
- dans une deuxième étape de procédé, on déroule le précurseur (55) de stratifié du cylindre (56) et on stratifié, sur la surface non revêtue du matériau support (12) en forme de bande, le premier matériau support auxiliaire (9) revêtu et on délamine la première couche adhésive (4) dans un dispositif de décollement consécutif dans le sens de la bande avec obtention du produit fini (24) stratifié.

11. Procédé selon l'une quelconque des revendications précédentes, **caractérisé en ce que** le matériau support (12) en forme de bande est soumis à un traitement par corona (13) avant sa stratification.

12. Procédé selon l'une quelconque des revendications précédentes, **caractérisé en ce que** la première couche adhésive (4) et la deuxième couche adhésive peuvent être identiques ou différentes.

13. Procédé selon l'une quelconque des revendications précédentes, **caractérisé en ce que** le premier matériau support auxiliaire (2) et le deuxième matériau support auxiliaire (2") peuvent être identiques ou différents.

14. Procédé selon l'une quelconque des revendications précédentes, **caractérisé en ce que** le premier est/ou le deuxième matériau support auxiliaire (2, 10) sont conçus de manière telle qu'ils peuvent être utilisés plusieurs fois, de préférence 5 à 10 fois, de manière particulièrement préférée 7 à 8 fois, pour le procédé.
